# EUROPÄISCHE PATENTANMELDUNG

(11) **EP 2 381 549 A1**
(43) Veröffentlichungstag der Anmeldung: **26.10.2011**
(21) Anmeldenummer: 10160973.3
(22) Anmeldetag: 25.04.2010
(51) Int. Cl.: H02G 3/04, F16L 3/26

(54) **Kabelführungsvorrichtung und Kabelrinne**

(71) Anmelder: Zurecon AG, 8003 Zürich (CH)
(72) Erfinder: Pfluger, Gerd, CH-4625, Oberbuchsiten (CH)
(74) Vertreter: Rutz & Partner

(57) **Zusammenfassung**

Die Kabelführungsvorrichtung (1) umfasst eine aus wenigstens einem plattenförmigen Metallkörper gefertigte, der Aufnahme von zu installierenden Leitungen (91, 92, 93) dienende Kabelrinne (10), die aus einem Bodenteil (11) und zwei Seitenwänden (12) besteht, durch die ein Kanal (K) gebildet wird. Erfindungsgemäss ist innerhalb des Kanals (K) wenigstens eine dem Halten und der Führung einzelner der Leitungen (91, 92, 93) dienende Gitterstruktur (2) angeordnet, die parallel zu den Seitenwänden (12) verlaufende Längsstege (27) und quer zu den Seitenwänden (12) verlaufende Querstege (26) aufweist, die miteinander verbunden sind, wobei die Gitterstruktur (2) mit wenigstens einer der Seitenwände (12) verbunden ist.

## Beschreibung

Die Erfindung betrifft eine Kabelführungsvorrichtung nach dem Oberbegriff des Patentanspruchs 1 sowie eine Kabelrinne für eine solche Kabelführungsvorrichtung nach Anspruch 15.

In Gewerbe-, Industrie- und Verwaltungsgebäuden sowie in Tunnelbauten werden Kabel, oft auch Kabel für Stark- und Schwachstromnetze, Leitungen und Rohre, infolge fehlender Eigenstabilität in Kabelführungsvorrichtungen gelegt und so z.B. von einem Schaltfeld oder einer Zentrale zu Verbrauchern geführt. Oft werden so genannte Kabelrinnen verwendet, wie sie z.B. in [1], Produktkatalog der LANZ OENSINGEN AG, Juni 2009, beschrieben sind.

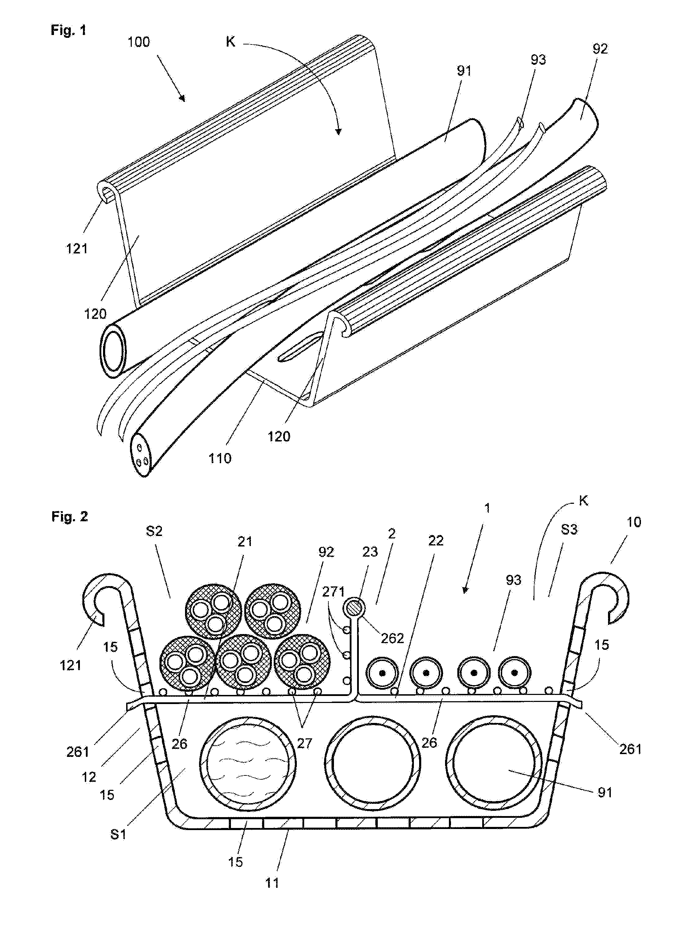

Die in [1], Seite 44 und nachstehend in Figur 1 gezeigten Kabelrinnen weisen zwei durch ein Bodenteil miteinander verbundene Seitenwände auf und sind in der Regel mit Längsschlitzen versehen, die der Luftkühlung der eingelegten Kabel dienen. Somit wird durch die Kabelrinnen ein auf drei Seiten geschlossener Kanal gebildet, welcher die eingelegten Kabel schützt und auch optisch abdeckt, so dass die installierten Kabel, die ungeordnet aufeinander liegen, von unten nicht sichtbar sind. Dabei ist jedoch zu beachten, dass die Längsschlitze der Kabelrinnen nach der Installation der Kabel regelmässig mindestens zum Teil durch eben diese Kabel abgedeckt sind, weshalb eine wünschbare Zufuhr von kühlender Luft zumeist nicht gewährleistet ist.

Weiterhin besteht das Problem, dass nach Abschluss der Kabelinstallation typischerweise ein Kabelgewirr in der Kabelrinne vorliegt. Dabei ist es schwierig, einzelne der installierten Kabel zu identifizieren, was insbesondere bei Änderungen der Installation wünschenswert wäre. Bei dem normalerweise auftretenden Kabelgewirr können ferner thermische, elektromagnetische und elektrische Störungen auftreten. Einzelne Kabel können sich zumindest punktuell relativ stark erwärmen. Ferner ist es möglich, dass Interferenzen zwischen einzelnen Leitungen, z.B. einem Starkstromkabel und einem Datenkabel, auftreten können.

Der vorliegenden Erfindung liegt daher die Aufgabe zugrunde, eine verbesserte Kabelführungsvorrichtung zu schaffen.

Insbesondere ist eine Kabelführungsvorrichtung zu schaffen, in der Kabel und Rohre in vorteilhafter Weise geordnet verlegt werden können. Dabei sollen Änderungen der Installation und Nachinstallationen, bei denen zusätzliche Kabel eingelegt werden, problemlos möglich sein. Ferner soll das Auftreten von Interferenzen zwischen einzelnen Leitungen weitgehend vermieden werden.

Mittels der erfindungsgemässen Kabelführungsvorrichtung sollen die Kabel zudem optimal konditioniert werden, so dass sie trocken und gekühlt gelagert werden. Dazu sollen die Kabel gut belüftet werden, so dass keine thermischen Probleme auftreten.

Ferner soll eine vorteilhafte Kabelrinne für eine erfindungsgemässe Kabelführungsvorrichtung geschaffen werden.

Diese Aufgabe wird mit einer Kabelführungsvorrichtung und einer Kabelrinne gelöst, welche die in Anspruch 1 bzw. 14 angegebenen Merkmale aufweisen. Vorteilhafte Ausgestaltungen der Erfindung sind in weiteren Ansprüchen angegeben.

Die Kabelführungsvorrichtung umfasst eine aus wenigstens einem plattenförmigen Metallkörper gefertigte, der Aufnahme von zu installierenden Leitungen dienende Kabelrinne, die aus einem Bodenteil und zwei Seitenwänden besteht, durch die ein Kanal gebildet wird.

Erfindungsgemäss ist innerhalb der Kabelrinne wenigstens eine dem Halten und der Führung einzelner der Leitungen dienende

Gitterstruktur angeordnet, die parallel zu den Seitenwänden verlaufende Längsstege und quer zu den Seitenwänden verlaufende Querstege aufweist, die miteinander verbunden sind, wobei die Gitterstruktur mit wenigstens einer der Seitenwände verbunden ist.

Durch die wenigstens eine Gitterstruktur kann die Kabelführungsvorrichtung vorteilhaft strukturiert und dadurch an die vorliegenden Bedürfnisse angepasst werden, die durch die Gegebenheiten der Infrastruktur und die physikalischen Eigenschaften der Leitungen bestimmt werden. Dabei können Leitungen, wie Rohrleitungen, elektrische oder optische Kabel vorteilhaft verlegt werden, welche ansonsten getrennt in mehreren Kabelrinnen verlegt werden müssten.

Anhand der wenigstens einen Gitterstruktur können die in die Kabelrinne eingelegten Leitungen geordnet und optimal konditioniert werden. Leitungen können nach Kabelart und/oder nach Bestimmungsort voneinander getrennt geführt werden. Dabei wird für eine Kabelart oder einen Bestimmungsort vorzugsweise eine einzelne Gitterstruktur vorgesehen. Z.B. werden Leitungen der Nachrichtentechnik in eine Gitterstruktur eingelegt, wo sie von Starkstromkabeln getrennt sind, wodurch Interferenzen vermieden werden. In der Gitterstruktur sind die Leitungen gut belüftet, so dass störende Erwärmungen vermieden werden. Weiterhin sind die Leitungen gut zugänglich, so dass der für diesen technischen Bereich zuständige Ingenieur schnell auf die Leitungen zugreifen kann. Weiterhin werden beim Einlegen von schweren Kabeln mechanische Einwirkungen auf feinere Kabel vermieden.

Besonders vorteilhaft ist diese Strukturierung der Kabelführungsvorrichtung, falls Änderungen oder Ergänzungen der Installation zu vollziehen sind. Dabei kann für eine Nachinstallation eine separate Gitterstruktur vorgesehen werden.

Die Verbindung der Gitterstruktur mit der Kabelrinne kann auf verschiedene Arten vorteilhaft erfolgen. Beispielsweise werden einzelne oder alle Endstücke der Querstege in Öffnungen der Seitenwände eingeführt und dort gehalten. Auf diese Weise kann auf zusätzliche Montagemittel verzichtet werden. Die Öffnungen in den Seitenwänden sind dabei derart angeordnet, dass eine Gitterstruktur in passender Höhe eingesetzt oder angehängt werden kann. In vorzugsweisen Ausgestaltungen sind die Öffnungen in den Seitenwänden derart angeordnet, dass zwei oder mehrere Gitterstrukturen übereinander angeordnet werden können.

Alternativ kann die Gitterstruktur auch von einer Haltevorrichtung gehalten sein, welche ein mit dem oberen Endelement einer Seitenwand verbindbares Kopplungselement und ein mit der Gitterstruktur verbindbares Halteelement aufweist. Vorzugsweise ist das Halteelement mit einem mit dem Kopplungselement verbundenen Seitenstück und einem Basisstück versehen, auf dem die Gitterstruktur ruht. Das Seitenstück und das Basisstück bilden dabei vorzugsweise ein L-Profil.

In einer weiteren vorzugsweisen Ausgestaltung sind an den Seitenwänden der Kabelrinne in den Kabelkanal hinein ragende Haken vorgesehen, in die die Gitterstruktur eingehängt werden kann. Die Haken können entlang der Kabelrinne vereinzelt vorgesehen sein, um eine Gitterstruktur bzw. einen Längssteg einer Gitterstruktur zu halten. Die Höhe der Gitterstruktur innerhalb der Kabelrinne wird dabei gewählt, indem ein entsprechender Längssteg in wenigstens zwei Haken eingehängt wird. Vorzugsweise bilden die Haken eine senkrecht zum Bodenteil der Kabelrinne verlaufende Hakenschiene. Dabei werden an einer oder an beiden Seitenwänden wenigstens zwei Hakenschienen vorgesehen. Die in einem bestimmten Rasterabstand vorgesehenen und übereinander liegenden Haken erlauben es, eine oder mehrere Gitterstrukturen in einer gewünschten Höhe in die Hakenschienen einzusetzen. Dazu werden die Längsstege der Gitterstruktur in einem Rasterabstand angeordnet, welche dem Abstand der Haken einer Hakenschiene entspricht.

In einer vorzugsweisen Ausgestaltung werden die Haken aus der Seitenwand ausgeschnitten und vorzugsweise um 90° in das Innere des Kanals gedreht. Die Haken werden somit aus dem Material der Seitenwände geformt, was mit geringem Aufwand möglich ist. Die Haken können dabei bereits bei der Fertigung der Kabelrinne um 90° oder erst bei Bedarf der Installation einer Gitterstruktur in das Innere der Kabelrinne gedreht werden. Sofern keine Gitterstruktur eingesetzt wird, können die ausgeschnittenen Haken in ihrer Ausgangsposition parallel zur Seitenwand verbleiben, so dass sie mit eingelegten Kabeln nicht in Kontakt treten. Solange die ausgeschnittenen Haken parallel zur Seitenwand ausgerichtet sind, können die Kabelrinnen unverändert gestapelt werden. Das für die Installation der Gitterstruktur vorgenommene Eindrehen der ausgeschnittenen Haken erfordert dabei nur wenig Aufwand und kann mit einem einfachen Werkzeug, z.B. einem Schraubenzieher, problemlos durchgeführt werden. Sofern jede Kabelrinne nur 2-5 Haken aufweist, so kann diese mit wenigen Handgriffen für die Installation der Gitterstruktur vorbereitet werden.

Sofern die Haken jedoch bereits bei der Fertigung der Kabelrinne gedreht werden, wird vorzugsweise jeder Haken bzw. jede Hakenschiene mit einem Kunststoffprofil abgedeckt, welches verhindert, dass Leitungen beim Einlegen beschädigt werden oder Hakenschienen beim Stapeln der Kabelrinnen verkrümmt werden. Um in diesem Fall Probleme beim Stapeln zu vermeiden, können ferner parallel zu den Hakenschienen verlaufende Schlitze in den Seitenwänden vorgesehen werden. Dadurch können die Hakenschienen je durch einen Schlitz in einer oberen Kabelrinne eingeführt werden.

In einer weiteren vorzugsweisen Ausgestaltung besteht die Gitterstruktur aus wenigstens zwei Strukturteilen, die gelenkig miteinander verbunden sind.

Die beiden Strukturteile weisen wenigstens zwei vorzugsweise L-förmige Querstege auf, die ein längeres Stegelement und ein kürzeres Stegelement umfassen. Die längeren Stegelemente beider Strukturteile sind mit Längsstegen versehen, auf die die Leitungen und Kabel abgelegt werden. Vorzugsweise werden die kürzeren Stegelemente nur eines Strukturteils mit Längsstegen versehen. Die kürzeren Stegelemente mit den Längsstegen bilden dabei eine Trennwand, welche es erlaubt, Leitungen zu ordnen und voneinander zu trennen.

Die Endstücke der längeren Stegelemente der beiden Strukturteile sind vorzugsweise gekrümmt, so dass sie in entsprechende Öffnungen in den Seitenwänden eingeführt werden können und darin gehalten sind. Die Endstücke der kürzeren Stegelemente sind vorzugsweise ringförmig ausgestaltet, so dass sie ein Gelenkelement, wie einen Gelenkstab oder je einen Gelenkbolzen aufnehmen können. Die beiden Strukturteile sind um den Gelenkstab bzw. die Gelenkbolzen gegeneinander drehbar, bis sie aneinander anstossen. Dies geschieht dann, wenn die kürzeren Stegelemente des einen Strukturteils an die als Anschlag dienenden Längsstege anstossen, die an den kürzeren Stegelementen des anderen Strukturteils vorgesehen sind. In dieser Stellung sind die längeren Stegelemente beider Strukturteile zumindest annähernd in einer Ebene ausgerichtet und in den Öffnungen der Seitenwände gehalten. Dabei ist es möglich, mehrere Gitterstrukturen einzusetzen und dadurch mehrere Ebenen zu definieren, in denen Leitungen eingelegt werden können. Jede Ebene kann beispielsweise einem Bestimmungsort der Leitungen zugeordnet werden, so dass beim Auftreten von Problemen die betreffenden Leitungen rasch identifiziert werden können.

Bei einer zweiteiligen Gitterstruktur sind die beiden Strukturteile vorzugsweise derart drehbar, dass sie nicht nur mit den einander gegenüberliegenden Seitenwänden, sondern auch mit derselben Seitenwand verbunden werden können. Bei dieser Montageart liegen die längeren Stegelemente der Querstege übereinander und definieren unterschiedliche Teilebenen, die parallel übereinander liegen. Zwischen den Querstegen, die mit mehreren Längsstegen versehen sind, wird dadurch ein Zusatzkanal geschaffen, in dem die eingelegten Kabel umschlossen sind und auch gegen Entnahme geschützt werden können.

Die erfindungsgemässe Kabelführungsvorrichtung erlaubt es somit, Leitungen und Kabel geordnet zu verlegen. Durch die vorzugsweise mit Kunststoff beschichtete Gitterstruktur werden die Leitungen und Kabel besonders schonend gehalten.

In einer weiteren vorzugsweisen Ausgestaltung wird eine Halterung vorgesehen, mittels der eine Gitterstruktur gehalten wird, welche mit einem Ende in den Kanal der Kabelrinne hinein ragt und mit dem anderen Ende aus dem Kanal hinaus führt. Dadurch können Kabel vorteilhaft aus einer ersten Richtung nach oben, nach unten oder seitlich in eine zweite Richtung umgelenkt und in die Kabelrinne eingeführt oder aus dieser weg geführt werden. Dabei ist es auch möglich, dass in der Kabelrinne Öffnungen vorgesehen werden, durch die die Gitterstruktur hindurch geführt wird. Vorzugsweise werden Kabelrinnen eingesetzt, welche aus einzelnen Elementen bestehen, von denen einzelne bedarfsweise entfernt werden, um eine Öffnung zu schaffen. Beispielsweise wird der Boden der Kabelrinne aus einzelnen plattenförmigen Elementen gefertigt, welche mit den Seitenwänden verbunden werden.

Im weiteren vorzugsweisen Ausgestaltungen werden Gitterstrukturen in die Kabelrinne eingesetzt, welche Zusammen mit der zugehörigen Seitenwand einen in sich geschlossenen Kanal bilden, in dem Leitungen, insbesondere wichtige Datenleitungen für Netzwerke, besonders geschützt sind. Weiterhin können Gitterstrukturen vorteilhaft eingesetzt werden, die mit der zugehörigen Seitenwand einen Kanal bilden, aber eine schlitzartige Öffnung

Nachfolgend wird die Erfindung anhand von Zeichnungen näher erläutert. Dabei zeigt:
- Fig. 1: eine bekannte Kabelrinne 100 mit ungeordnet darin eingelegten Leitungen 91, 92 und 93, wie Rohre 91, Starkstromkabel 92 und nachrichtentechnische Kabel 93;
- Fig. 2: eine erfindungsgemässe Kabelführungsvorrichtung 1 mit einer Kabelrinne 10, in der eine mit beiden Seitenwänden 12 der Kabelrinne 10 verbundene Gitterstruktur 2 angeordnet ist, die aus zwei gelenkig miteinander verbundenen Teilen 21, 22 besteht;
- Fig. 3: die Kabelführungsvorrichtung 1 von Figur 2 in räumlicher Darstellung;
- Fig. 4: die zweiteilige Gitterstruktur 2 von Figur 2 in räumlicher Darstellung;
- Fig. 5a, b: eine weitere zweiteilige Gitterstruktur 2, die wie die Gitterstruktur 2 von Figur 2 mit beiden Seitenwänden 12 der Kabelrinne 10 verbindbar ist und für den Transport zusammengefaltet und gestapelt werden kann;
- Fig. 6: eine erfindungsgemässe Kabelführungsvorrichtung 1 mit der in Figur 3 gezeigten Kabelrinne 10 und drei identischen Gitterstrukturen 2a, 2b, 2c, die mit beiden Seitenwänden 12 der Kabelrinne 10 verbunden sind;
- Fig. 7: die Kabelführungsvorrichtung 1 von Figur 5 mit zwei verschiedenen Gitterstrukturen 2, 20, die je an nur einer Seitenwand 12 der Kabelrinne 10 befestigt sind;
- Fig. 8: eine erfindungsgemässe Kabelführungsvorrichtung 1 mit einer Kabelrinne 10 gemäss Figur 3 und zwei Gitterstrukturen 2a, 2b, die mit einer Haltevorrichtung 29 an einer Seitenwand 12 der Kabelrinne 10 befestigt sind;
- Fig. 9: die Frontansicht der Kabelführungsvorrichtung 1 von Figur 7;
- Fig. 10: eine erfindungsgemässe Kabelführungsvorrichtung 1 mit einer Haltevorrichtung 29, mit der eine Gitterstruktur 2 innerhalb der Kabelrinne 10 gemäss Figur 3 gehalten ist, deren Längsstege 27 derart gebogen sind, dass sie an einem Ende aus der Kabelrinne 10 hinausgeführt ist;
- Fig. 11: eine erfindungsgemässe Kabelführungsvorrichtung 1 mit Hakenschienen 28, die in eine Seitenwand 12 der Kabelrinne 10 eingearbeitet sind und mittels denen eine Gitterstruktur 2 gehalten ist, die nur an der einen Seitenwand 12 oder in gleicher Weise auch an der anderen Seitenwand 12 der Kabelrinne 10 gehalten ist;
- Fig. 12: eine erfindungsgemässe Kabelrinne 10 mit auf derselben Höhe in beiden Seitenwänden 12 angeordneten Haken 28, in die unterschiedlich dimensionierte Gitterstrukturen 2a und 2b eingehängt sind
- Fig. 12a: einen aus der Seitenwand 12 ausgeschnittenen Haken 28, der parallel zur Seitenwand 12 ausgerichtet ist und dadurch das Einlegen von Leitungen nicht behindert; und
- Fig. 12b: den aus der Seitenwand 12 ausgeschnittenen Haken 28 von Figur 12a, nachdem er maschinell oder manuell um 90° in das Innere der Kabelrinne 10 gedreht wurde.

Figur 1 zeigt eine bekannte einstückige Kabelrinne 100 mit einem Bodenteil 110 und zwei Seitenwänden 120, die einen Kanal K bilden. In die Kabelrinne 100 sind Leitungen, ein Rohr 91, ein Starkstromkabel 92 und zwei Schwachstromkabel 93 eingelegt. Es ist ersichtlich, dass bereits bei der Installation von nur wenigen Leitungen 91, 92, 93 ein Leitungsgewirr auftritt, welches üblicherweise die einleitend beschriebenen Probleme verursacht.

Figur 2 zeigt eine erfindungsgemässe Kabelführungsvorrichtung 1 mit einer Kabelrinne 10, die mit Öffnungen 15 in den Seitenwänden 12 und im Bodenteil 11 versehen ist. In einzelnen Öffnungen 15 beider Seitenwände 12 ist eine Gitterstruktur 2 gehalten, welche zwei Strukturteile 21, 22 umfasst, die gelenkig miteinander verbunden sind. Die beiden Strukturteile 21, 22 können gleiche oder unterschiedliche Abmessungen aufweisen und an die zu installierenden Leitungen entsprechend angepasst sein.

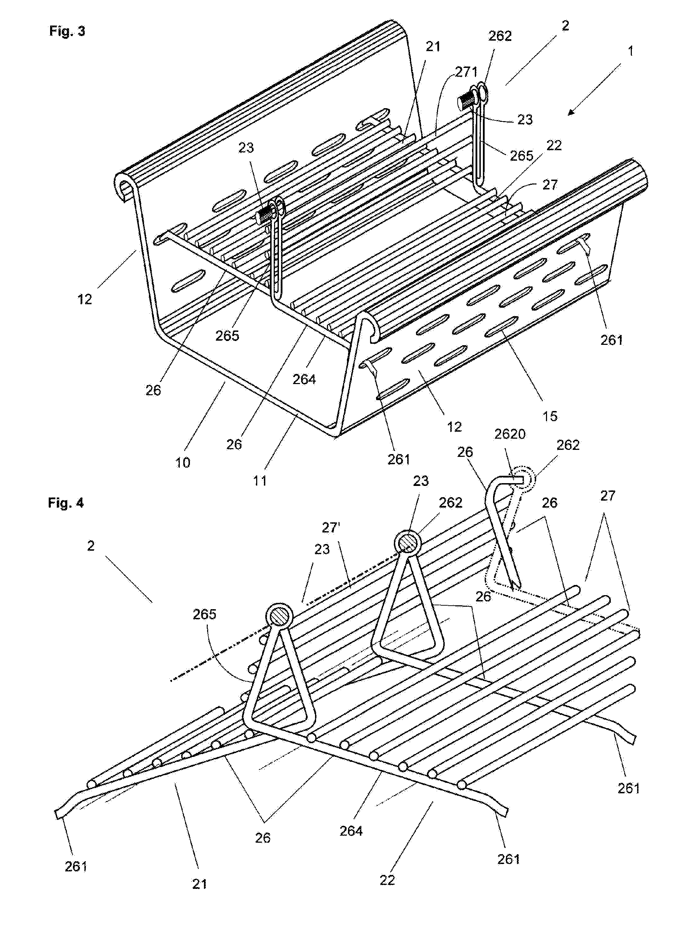

Wie dies in Figur 4 gezeigt ist, weisen die Strukturteile 21, 22 wenigstens zwei L-förmige Querstege 26 auf, die durch senkrecht dazu verlaufende Längsstege 27 miteinander verbunden sind. Die Querstege 26 weisen ein längeres Stegelement 264 und ein kürzeres Stegelement 265 auf. Die längeren Stegelemente 264 sind mit den daran befestigten Längsstegen 27 in einer Ebene ausgerichtet und mit den Endstücken 261 in Öffnungen 15 gehalten, die zumindest annähernd denselben Abstand aufweisen wie die Querstege 26. Die Endstücke 261 sind leicht nach unten gebogen, so dass sie einerseits problemlos in die Öffnungen 15 eingeführt werden können und anschliessend, insbesondere unter der Last der Leitungen 91, 92, 93 darin stabil gehalten sind.

Die kürzeren Stegelemente 265 weisen ringförmig ausgestaltete Endstücke 262 auf, in denen Gelenkbolzen 23 oder eine Gelenkstange 23 gehalten ist. Alternativ können die Endstücke 262 der kürzeren Stegelemente 265 der beiden Strukturteile 21, 22 mit zueinander korrespondierenden Gelenkelementen versehen sein. Beispielsweise kann eines der Endstücke 262 ringförmig ausgestaltet sein, während das andere Endstück 2620 L-förmig oder hakenförmig ausgestaltet ist. Die Endstücke 262, 2620 können daher miteinander gekoppelt werden, so dass sie Gelenke und eine gemeinsame Gelenkachse bilden und die beiden Strukturteile 21, 22 gegeneinander drehbar sind. Auf diese Weise kann auf die Verwendung zusätzlicher Gelenkelemente wie die Gelenkstange 23 verzichtet werden.

In dieser vorzugsweisen Ausgestaltung sind nur die kürzeren Stegelemente 265 des ersten Strukturteils 22 mit Längsstegen 27' versehen. Dadurch wird einerseits Material gespart. Anderseits können die beiden Strukturteile 21,22 problemlos ineinander verschoben und miteinander verbunden werden. Wie dies in Figur 2 gezeigt ist und aus Figur 4 hervorgeht, können die beiden Strukturteile 21, 22 nur so weit gegeneinander gedreht werden, bis die kürzeren Stegelemente 265 des zweiten Strukturteils 21 an den Längsstegen 27' der kürzeren Stegelemente 265 des ersten Strukturteils 22 anstossen. In diesem Endanschlag sind die längeren Stegelemente 264 in einer Ebene ausgerichtet. Die kürzeren Stegelemente 265 mit den daran befestigten Längsstegen 27' bilden eine senkrecht dazu stehende Ordnungstrennwand, wie dies in Figur 2 gezeigt ist.

Der durch die Kabelrinne 10 gebildete Kanal K wird durch die Gitterstruktur 2 somit in drei Sektoren S1, S2, S3 unterteilt. Im ersten Sektor S1, der unterhalb der Gitterstruktur 2 liegt, sind Rohrleitungen 91 z.B. für Wasser oder Gase angeordnet. Im zweiten Sektor S2, der oberhalb eines der Strukturteile 21 liegt, sind Starkstromkabel 92 angeordnet. Im dritten Sektor S3 sind Schwachstromkabel 93, zum Beispiel Bus-Leitungen für Computersysteme angeordnet. Wie erwähnt, bilden die kürzeren Stegelemente 265 der beiden Strukturteile 21, 22 eine Ordnungstrennwand zwischen den Kabeln 92, 93.

Durch entsprechende Positionierung von Öffnungen 15 in den Seitenwänden 12 der Kabelrinne 10 kann vorgesehen werden, dass die Installationshöhe der Gitterstruktur 2 wahlweise gewählt werden kann. Beispielsweise werden Öffnungen 15 vorgesehen, die auf zwei oder mehreren Ebenen liegen und einen Abstand aufweisen, welcher dem Abstand der Querstege 26 entspricht. Auf diese Weise kann die Gitterstruktur 2 in einer gewünschten Ebene eingesetzt werden. Sofern im ersten Sektor S1 Rohre mit grossem Durchmesser zu installieren sind wird die Gitterstruktur 2 entsprechend um eine oder zwei Ebenen nach oben versetzt.

Besonders vorteilhaft bei der erfindungsgemässen Kabelführungsvorrichtung 1 ist, dass sie rasch und den Bedürfnissen der Anwender entsprechend konfiguriert werden kann. Die Gitterstruktur 2 kann mit wenigen Handgriffen in die entsprechend ausgestaltete Kabelrinne 10 eingesetzt werden und ist in der Folge durch das Eigengewicht sowie durch das Gewicht der installierten Leitungen 91, 92, 93 gehalten.

Aus Figur 2 ist ersichtlich, dass eine Trennung der verschiedenen Arten von Leitungen 91, 92 und 93 realisierbar ist, so dass Interferenzen vermieden werden. Ferner kann der Installateur auf die geordneten Leitungen 91, 92 und 93 gezielt zugreifen. Der Elektriker findet seine Starkstromkabel 92 im Sektor 2, während der Netzwerk-Ingenieur auf die Datenleitungen, gegebenenfalls auch optische Kabel, im Sektor 3 zugreifen kann.

In Figur 3 ist die Kabelführungsvorrichtung 1 ohne Leitungen 91, 92 und 93 in räumlicher Darstellung gezeigt. Es ist gezeigt, dass die ringförmig ausgestalteten Endstücke 262 der kürzeren Stegelemente 265 durch Gelenkbolzen 23 miteinander verbunden sind.

Figur 4 zeigt die Gitterstruktur 2 von Figur 2 in räumlicher Darstellung. Die ringförmig ausgestalteten Endstücke 262 der kürzeren Stegelemente 265 sind durch eine symbolisch gezeigte Gelenkstange 23 miteinander verbunden. Ferner ist in Figur 4 eine optionale Ausgestaltung gezeigt, bei der die Endstücke 262, 2620 zueinander korrespondierende Gelenkelemente aufweisen. Dabei ist ein exemplarisch gezeigtes Endstück 2620 eines Quersteges 26 L-förmig ausgestaltet.

Die Gitterstruktur 2 wird in ihrer Länge vorzugsweise entsprechend der Länge der Kabelrinne 10 gewählt. Ferner ist es möglich, entlang der Kabelrinne 10 auch eine oder mehrere kürzere, gegebenenfalls voneinander beabstandete Gitterstrukturen 2 in die Kabelrinne 10 einzusetzen. Dadurch kann Material gespart werden.

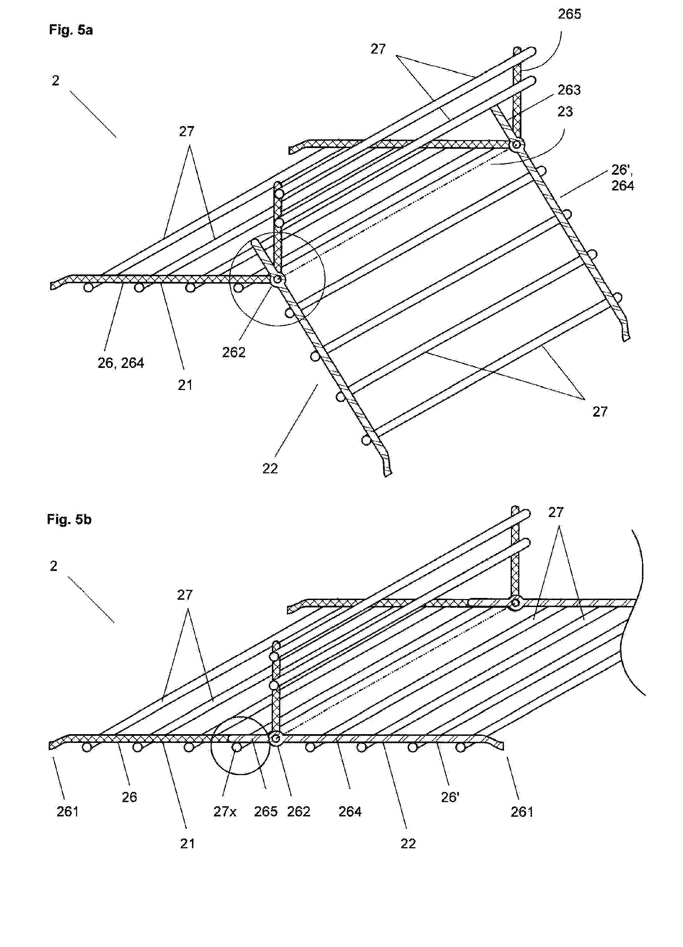

In den Figuren 5a und 5b ist eine weitere aus zwei Strukturteilen 21, 22 bestehende Gitterstruktur 2 gezeigt, die wie die Gitterstruktur 2 von Figur 2 mit beiden Seitenwänden 12 der Kabelrinne 10 verbindbar ist und für den Transport zusammengefaltet und gestapelt werden kann. Das erste Strukturteil 21 weist L-förmig ausgebildete Querstege 26 auf, an dessen Unterseite Längsstege 27 befestigt sind. Die Querstege 26 weisen einen längeres Stegelement 264 und ein kürzeres Stegelement 265 auf, an dessen Verbindungsstelle ringförmig ausgestaltete Gelenkelemente 262 integriert oder vorzugsweise in der Ebene der Längsstege 26 des längeren Stegelements 264 an diesem befestigt sind. Das zweite Strukturteil 22 weist stabförmig ausgestaltete Querstege 26' auf, die ein längeres Stegelement 264 und ein kürzeres Stegelement 265 aufweisen, die durch ein ringförmiges Gelenkelement 262 miteinander verbunden sind. Durch die ringförmigen Gelenkelemente 262 ist eine Gewindestange 23 hindurch geführt, um die die beiden Strukturteile 21, 22 so weit drehbar sind, bis die längeren Stegelemente 264 der beiden Strukturteile 21, 22 aneinander anliegen oder auseinander gedreht und wieder parallel zueinander ausgerichtet sind. In dieser zweiten Lage, in der die Strukturteile 21, 22 aufgefaltet sind, liegen die Kürzeren Stegelemente 265 des zweiten Strukturteils 22 an wenigstens einem Längssteg 27x des ersten Strukturteils 21 an, so dass die beiden Strukturteile 21, 22 unter der Last von Leitungen nicht weiter gegeneinander gedreht werden können und die längeren Stegelemente 264 der beiden Strukturteile 21, 22 parallel zueinander ausgerichtet bleiben. Beim Falten der beiden Strukturteile 21, 22 werden die kürzeren Stegelemente 265 des zweiten Strukturteils 22 unterhalb der Längsstege 27 hindurch geführt, die am abgewinkelten und als Ordnungstrenner dienenden kürzeren Stegelement 265 des ersten Strukturteils 21 angeordnet sind. Zugefaltete Gitterstrukturen 2, die in der Folge ebenfalls ein L-Profil bilden, können gestapelt und mit geringem Raumbedarf transportiert werden.

Die Strukturteile 21, 22 der Gitterstruktur 2 von Figur 5a und 5b können ferner beide stabförmige Querstege sechs und 20 mit je einem Gelenkelement 262 aufweisen, falls die vorteilhafte Ordnungstrennung nicht erwünscht ist. Die Strukturteile 21, 22 können ferner unterschiedlich dimensioniert werden.

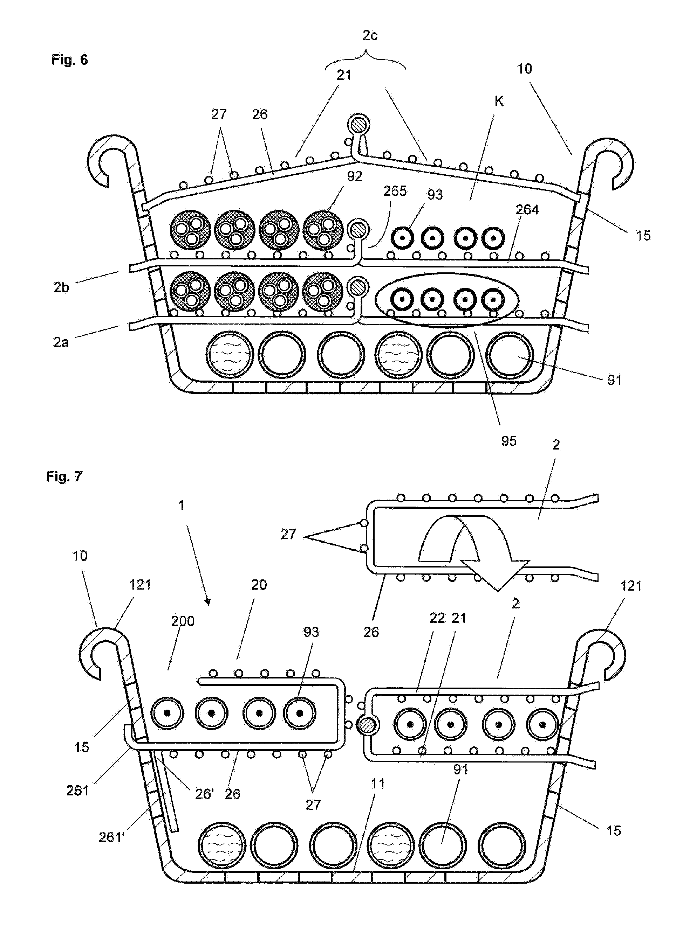

Figur 6 zeigt eine erfindungsgemässe Kabelführungsvorrichtung 1 mit der in Figur 3 gezeigten Kabelrinne 10, in die drei identische Gitterstrukturen 2a, 2b, 2c in der Art eingesetzt sind, wie dies bereits in Figur 2 gezeigt ist. Die Gitterstrukturen 2a, 2b, 2c weisen verkürzte kürzere Stegelemente 265 auf, so dass jede der Gitterstrukturen 2a, 2b, 2c weniger Raumhöhe in Anspruch nimmt. Die Gitterstrukturen 2a, 2b, 2c sind auf verschiedenen Höhen angeordnet, und mit den längeren Stegelementen 264 in den Öffnungen 15 der Seitenwände 12 der Kabelrinne 10 verankert.

Die kürzeren Stegelemente 265 können bedarfsweise auch weiter verkürzt werden, so dass die Endstücke 262 an den längeren Stegelementen 264 anliegen. In diesem Fall werden jedoch zusätzliche Arretierelemente benötigt, welche die beiden Strukturteile 21, 22 in einer Ebene fixieren. Dazu können die Querstege Verlängerungselemente aufweisen, welche aneinander oder beispielsweise an den Längsstegen anstossen, wenn die beiden Strukturteile 21, 22 in einer Ebene ausgerichtet sind.

Figur 6 zeigt, dass mit den beiden zusätzlichen Gitterstrukturen 2b und 2c eine weitere Strukturierung des Kanals K realisierbar ist. Jede der drei Ebene kann einem Bestimmungsort zugeordnet werden. Beispielsweise wird die erste Ebene mit der Gitterstruktur 2a dem ersten, die zweite Ebene mit der Gitterstruktur 2b dem zweiten und die dritte Ebene mit der Gitterstruktur 2c dem dritten Stockwerk eines Gebäudes zugeordnet. Auch bei verdichteter Bauweise, mit normalerweise gemeinsam geführten Leitungen 91, 92, 93 ist es möglich die Stockwerke nun auch leitungstechnisch voneinander zu trennen. Kabelgruppen einer Ebene werden vorzugsweise durch Montagemittel 95, wie Kabelbinder, mit der zugehörigen Gitterstruktur 2a, 2b bzw. 2c verbunden. Einzelne Gitterstrukturen 2 können dabei mit einem Handgriff zusammen mit den installierten Kabeln 92, 93 entfernt werden, wonach auf eine bestimmte Ebene zugegriffen werden kann. Weiterhin kann vorgesehen werden, dass eine zusätzliche Gitterstruktur 2 für eine Nachinstallation eingesetzt wird. Die später installierten Kabel können wiederum geordnet verlegt werden, wonach auf diese Kabel ebenfalls gezielt zugegriffen werden kann. Eine zusätzliche Gitterstruktur 2 wird bei einer Neuinstallation vorzugsweise dann eingesetzt wenn ein neuer Bestimmungsort mit Leitungen versorgt werden muss. Sofern für die bestehenden Stockwerke zusätzliche Leitungen zu installieren sind, so werden diese vorzugsweise in den betreffenden Ebenen nachinstalliert, was mit geringem Aufwand möglich ist.

Wie dies in Figur 6 gezeigt ist, wird der Querschnitt des Kanals K der Kabelrinne 10 optimal ausgenutzt, während gewährleistet bleibt, dass die einzelnen Leitungen 92, 93 optimal konditioniert sind. Die Leitungen 92, 93 sind voneinander getrennt und werden optimal belüftet.

Die erfindungsgemässe Lösung erlaubt es somit, die Anforderungen von unterschiedlichen Anwendern individuell zu befriedigen. Diese Anforderungen sind normalerweise völlig unterschiedlich, weshalb die erfindungsgemässe Kabelführungsvorrichtung 1 in einem breiten Einsatzgebiet optimale Dienste leistet. Die einzelnen Leitungen 92, 93 können individuell gegen mechanische, thermische, elektrische, elektromagnetische und gegen Einwirkungen von unbefugten Personen geschützt werden. Die erfindungsgemäss eingesetzten Gitterstrukturen 2 erlauben es, einzelne Leitungen 92, 93 völlig getrennt und abgeschlossen zu montieren. Dabei können diese besonders zu schützenden Leitungen 92, 93 in eine vormontierte Gitterstruktur 2 oder mitsamt der Gitterstruktur 2 eingesetzt werden, welche der Folge vorzugsweise arretiert und verschlossen wird. Figur 7 zeigt die Kabelführungsvorrichtung 1 von Figur 6 mit derartigen Gitterstrukturen 2, 20 die je an einer Seitenwand 12 der Kabelrinne 10 befestigt ist.

In die rechte Seitenwand 12 ist eine Gitterstruktur 2 gemäss Figur 6 eingesetzt. Die beiden Strukturteile 21, 22 der Gitterstruktur 2 sind übereinander angeordnet und schliessen einen Raum ein, in dem Schwachstromkabel 93 eingelegt sind. Die Schwachstromkabel 93, typischerweise Kabel der Nachrichtentechnik, sind zwischen den beiden Strukturteilen 21, 22 sowie der Seitenwand 12 eingeschlossen und in einem grösseren Abstand von den Rohrleitungen 91 gehalten. Auf diese Weise ist es möglich, empfindliche Datenleitungen besonders zu schützen und von weiteren Leitungen zu trennen. Die Gitterstruktur 2 bildet dabei praktisch einen faradayschen Käfig, der die Datenleitungen 91 gegen Einstrahlung schützt. Die Vorrichtung kann dabei leicht erweitert und mit Verschlusselementen versehen werden, die verhindern, dass die Gitterstruktur 2 entfernt werden kann. Dadurch bleiben die Kabel 93 auch gegen Entnahme geschützt. Die Gitterstruktur 2 ist mit einem Gelenk versehen, auf das verzichtet werden kann. Anstelle der mit der Seitenwand 12 verbundenen Gitterstruktur 2 kann die in Figur 7 gezeigte Gitterstruktur 2 eingesetzt werden, die U-förmig ausgestaltete Querstege 26 aufweist, die in Öffnungen 15 der Seitenwände 12 oder auch des Bodenteils 11 verankert werden können.

An der linken Seitenwand 12 ist eine Gitterstruktur 20 in die Öffnungen 15 eingehängt, welches U-förmige Querstege 26 aufweist, die auf einer Seite wenigstens zwei gekrümmte Endstücke 261 aufweisen, die durch Öffnungen 15 in der Seitenwand 12 ausgeführt sind. Ferner ist wenigstens ein Endstück 261' vorgesehen, welches nach unten gebogen ist und an der Seitenwand 12 anliegt und somit als Stützelemente dient. Die anderen Endstücke der U-förmigen Querstege 26 sind verkürzt, so dass entlang der Kabelrinne 10 eine schlitzartige Öffnung 200 resultiert, die dem Einlegen oder der Entnahme der Leitungen 93 dient. Sofern mehrere Querstege 26 als Stützelemente dienen, so kann die Gitterstruktur 2 auch schwere Leitungen 92 tragen.

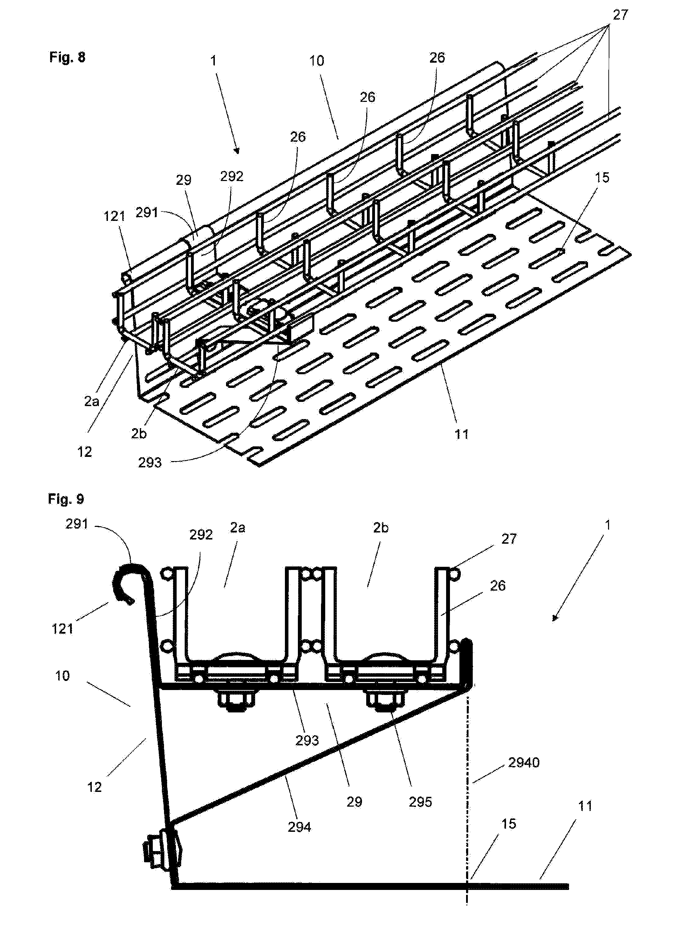

Figur 8 zeigt eine erfindungsgemässe Kabelführungsvorrichtung 1 mit einer Kabelrinne 10 gemäss Figur 3 und zwei U-Profilförmige Gitterstrukturen 2a und 2b, die mit einer Haltevorrichtung 29 an einer Seitenwand 12 der Kabelrinne 10 befestigt sind. Die vorzugsweise mit Kunststoff beschichteten Gitterstrukturen 2a und 2b weisen wiederum Querstege 26 und Längsstege 27 auf. Die Gitterstrukturen 2 können in der erforderlichen Anzahl in die Kabelrinne 10 eingesetzt werden. Durch die Verwendung mehrerer Halterungen 29 oder einer kombinierten Halterung 29 ist es wiederum möglich, Gitterstrukturen 2 auf verschiedenen Ebenen anzuordnen. Der in der Kabelrinne 10 vorhandenen Kanal K kann daher wiederum optimal strukturiert und genutzt werden. Besonders vorteilhaft ist, dass die Gitterstrukturen 2 wahlweise an einer oder beiden Seitenwänden 12 befestigt werden können. Sofern z.B. eine Gitterstruktur 2 nur an einer Seitenwand 12 befestigt ist, so kann der verbleibende Raum des Kanals K konventionell genutzt werden. Die erfindungsgemässe Kabelführungsvorrichtung 1 kann daher auch in dieser Ausgestaltung vorteilhaft an die Bedürfnisse des Anwenders angepasst werden. Ferner ist diese Ausgestaltung auch für spätere Installationsarbeiten, bei denen Leitungen ersetzt oder zusätzlich eingelegt werden sollen, besonders vorteilhaft. Die eingesetzte Gitterstruktur 2 kann mit einem Handgriff gelöst und mitsamt den darin gehaltenen Leitungen 92, 93 aus dem Kanalquerschnitt der Kabelrinne 10 entfernt werden. Die in der Gitterstruktur 2 verlegten Leitungen, typischerweise Schwachstromkabel der Nachrichtentechnik, sind dabei wiederum optimal gegen mechanische sowie elektro-magnetische Einwirkungen geschützt. Ferner kann die Kabelführungsvorrichtung 1 nach der ersten Installation bedarfsweise erweitert und mit weiteren Gitterstrukturen 2 ergänzt werden.

Die in den Figuren 7 und 8 gezeigte Haltevorrichtung 29 weist ein mit dem oberen Endelement 121 einer Seitenwand 12 verbundenes Kopplungselement 291 und ein die Gitterstruktur 2 tragendes Halteelement 292, 293 auf. Das Halteelement 292, 293 umfasst ein mit dem Kopplungselement 291 verbundenes Seitenstück 292 und ein Basisstück 293, auf dem die Gitterstrukturen 2a, 2b ruhen. Das Seitenstück 292 und das Basisstück 293, welches vorzugsweise von einem Stützelement 294 gestützt und mittels Montagemitteln 295 mit den Gitterstrukturen 2a, 2b verbunden ist, bilden dabei zumindest annähernd ein L-Profil. Die Montagemittel 295 umfassen beispielsweise Schrauben, Schraubenmuttern, und Klemmelemente, wie Unterlagsscheiben oder gelochte Platten. Figur 9 zeigt die Frontansicht der Kabelführungsvorrichtung 1 gemäss Figur 8. dabei ist gezeigt, dass das schräg ausgerichtete Stützelement 294 der Haltevorrichtung 29 auch durch ein vertikal ausgerichtetes Stützelement 2940 ersetzt werden kann, welches weniger Raum in Anspruch nimmt und als Ordnungstrennelement dienen kann. Ferner kann eine Gitterstruktur vorgesehen sein, welche als Haltevorrichtung 29 dient. Beispielsweise wird eine Gitterstruktur vorgesehen, die in Öffnungen 15 gehalten ist, die in den Seitenwänden 12 und im Bodenteil 11 der Kabelrinne 10 vorgesehen sind.

Die Haltevorrichtung 29 erlaubt es insbesondere auch, Gitterstrukturen 2 an Seitenwänden von Kabelrinnen zu befestigen, welche keine Öffnungen in den Seitenwänden aufweisen. Auf diese Weise können Kabelrinnen bereits bestehender Installationen mit Gitterstrukturen ergänzt und somit entsprechend strukturiert werden.

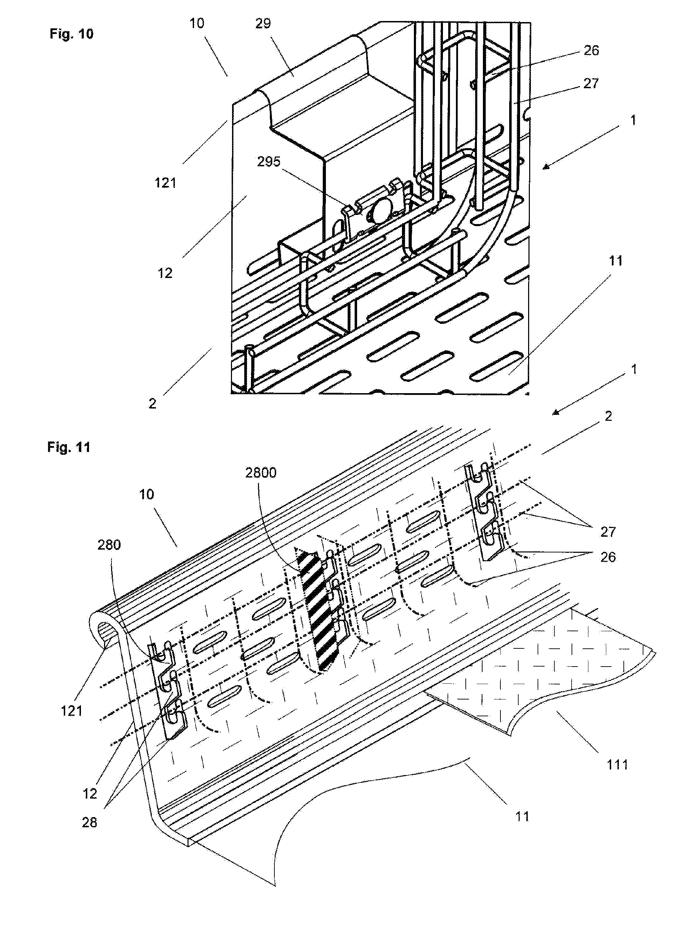

Figur 10 zeigt eine erfindungsgemässe Kabelführungsvorrichtung 1 mit einer Kabelrinne 10 gemäss Figur 3 und einer Haltevorrichtung 29, mit der eine Gitterstruktur 2 gehalten ist, deren Längsstege 26 an einer Stelle um 90° gebogen sind, so dass ein Teil der Gitterstruktur 2 in der Kabelrinne 10 geführt ist und das andere Teil an der Biegestelle der Längsstege 26 aus der Kabelrinne 10 hinaus geführt ist. An die Biegestelle schliesst vorzugsweise eine weitere Gitterstruktur 2 an, von der Leitungen 91, 92, 93 übernommen werden, welche weiter geführt oder an der die Gestelle von aussen zusätzlich eingeführt werden. Auf diese Weise können Leitungen 91, 92, 93 einzeln oder in grösserer Anzahl schonend in die Kabelrinne 10 eingeführt werden. Dabei ist besonders vorteilhaft, dass die Gitterstruktur 2 mit der Biegestelle an beliebigen Stellen montiert werden kann, so dass wahlweise Verzweigungen in der Infrastruktur vorgesehen werden können.

Figur 11 zeigt eine erfindungsgemässe Kabelführungsvorrichtung 1 mit Serien von Haken 28 bzw. Hakenschienen 280, die in eine oder beide Seitenwände 12 der Kabelrinne 10 eingearbeitet sind. In die Hakenschienen 280 ist eine Gitterstruktur 2 derart eingehängt, dass die Längsstege 27, die an den an der Seitenwand 12 anliegenden Teilen der Querstege 26 angeordnet sind, in den einzelnen Haken 28 der Hakenschienen 280 gehalten sind. Der Abstand zwischen den Haken 82 ist dabei zumindest annähernd gleich gewählt, wie der Abstand zwischen den genannten Längsstegen 27. In die Hakenschienen 280 kann daher eine Gitterstruktur 2 eingehängt werden, wie sie in Figur 8 gezeigt ist. Ferner können an beiden Seitenwänden 12 der Kabelrinne 10 Hakenschienen 280 vorgesehen sein, in die separate Gitterstrukturen 2 gemäss Figur 8 oder eine gemeinsame Gitterstruktur 2 eingehängt wird, deren Querstege 26 mit einem Ende an der einen und mit dem anderen Ende an der anderen Seitenwand 12 anliegen. Im ersten Fall kann die Kabelführungsvorrichtung 1 fein strukturiert werden. Im zweiten Fall wird mit der Gitterstruktur 2 ein Gitterkanal geschaffen, welcher es erlaubt, den Kanal K der Kabelrinne 10 in einen unteren Teil und in einen oberen Teil zu unterteilen. Im unteren Teil werden dabei typischerweise grobe Leitungen 91, insbesondere Rohre verlegt, während im oberen Teil vorzugsweise Stromkabel 92 und Leitungen 93 der Nachrichtentechnik verlegt werden.

Besonders vorteilhaft bei dieser Ausgestaltung ist, dass die Hakenschienen 280 mit minimalem Aufwand in die Seitenwände 12 eingearbeitet werden können. Dazu wird ein Schnitt in eine Seitenwand 12 eingefügt, welcher dem Querschnitt der Hakenschiene 28 entspricht. Anschliessend, bereits bei der Fertigung, bei der Installation der Kabelrinne 10 oder erst nach der Installation der Kabelrinne 10, wird die ausgeschnittene Hakenschiene 28 in das Innere der Kabelrinne 10 abgewinkelt bzw. um 90° gedreht. Die Haken 82 der Hakenschiene 280 und die Gitterstruktur 2 werden dabei vorzugsweise derart ausgebildet, dass die Gitterstruktur 2 in beliebiger Höhe installiert werden kann, auch wenn diese an beiden Seitenwänden 12 gehalten ist. Dabei ist besonders vorteilhaft, dass die derart vorgesehenen Hakenschienen 280 keinen Raum in Anspruch nehmen, so dass der Anwender derartig ausgestaltete Kabelrinnen 10 auch dann einsetzen kann, wenn der Einsatz einer Gitterstruktur 2 nicht für die Erstinstallation vorgesehen ist, sondern für eine Nachinstallation ermöglicht werden soll.

Sofern die Hakenschienen 28 bereits bei der Fertigung eingedreht werden, so werden Sie vorzugsweise mit einem Schutzkörper 2800 z.B. aus Kunststoff abgedeckt, welcher die Hakenschiene 28 aufnimmt, an der Seitenwand 12 anliegt und einen in den Kanal K hineinragenden Körper aufweist, der keine Kanten aufweist. Der Schutzkörper 2800 nimmt dabei kaum mehr Raum in Anspruch als die Hakenschiene 28, weshalb für die Installation der Leitungen 91, 92, 93 praktisch der gesamte Kanalquerschnitt zur Verfügung steht. Sofern der Anwender zu einem späteren Zeitpunkt entscheidet, eine Gitterstruktur 2 in die erfindungsgemässe Kabelrinne 10 einzusetzen, so werden die Schutzkörper 2800 entfernt und die entsprechend gewählte Gitterstruktur 2 eingesetzt. Auf die optionale Verwendung der Schutzkörper 2800 kann gänzlich verzichtet werden, wenn die einzelnen Haken 28 oder die Hakenschienen 280 vom Installateur selbst bei Bedarf in das Innere der Kabelrinne 10 eingedreht werden, was mit geringem Aufwand möglich ist.

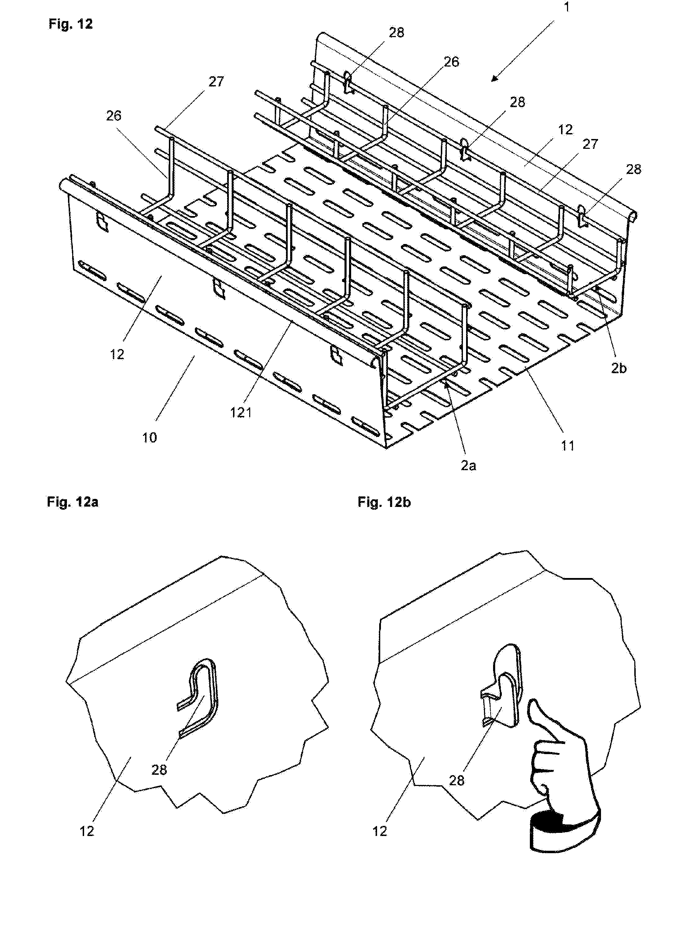

Figur 12 zeigt eine Kabelführungsvorrichtung 1 mit einer Kabelrinne 10, an deren Seitenwänden 12 einzelne Haken 28 ausgeschnitten und bei der Fertigung oder durch den Installateur in das Innere der Kabelrinne 10 eingedreht wurden. In diesem Fall sind keine Hakenschienen 280, sondern nur einzelne Haken 28 ausgeschnitten, die auf gleicher Höhe liegen. Die unterschiedlich dimensionierten Gitterstrukturen 2a, 2b sind mit dem obersten Längssteg 27 in die Haken 28 eingehängt. Die Querstege 26 sind L-förmig ausgestaltet. Die mit den L-förmig ausgestalteten Querstegen 26 versehene

Gitterstruktur 2 von Figur 7 kann daher in gleicher Weise vorteilhaft in die Haken 28 eingehängt werden. Diese Gitterstruktur 2 von Figur 7 kann daher entweder in Haken 28 eingehängt oder die Öffnungen 15 von Seitenwänden 12 einer Kabelrinne 10 eingesetzt werden. Vorzugsweise weisen die Seitenwände der Kabelrinne 10 daher Öffnungen 15 und Haken 28 auf, die auch miteinander kombiniert werden können. Das heisst, es wird ein Haken 28 sowie zusätzliches Material ausgeschnitten, welches eine Öffnung 15 hinterlässt.

Figur 12a zeigt einen aus der Seitenwand 12 ausgeschnittenen Haken 28, der parallel zur Seitenwand 12 ausgerichtet ist und dadurch das Einlegen von Leitungen nicht behindert.

Figur 12b zeigt den aus der Seitenwand 12 ausgeschnittenen Haken 28 von Figur 12a, nachdem er maschinell oder manuell um 90° in das Innere der Kabelrinne 10 gedreht wurde.

Die Kabelführungsvorrichtung 1 kann mit verschiedenartig ausgestalteten Kabelrinnen 10 versehen werden, soweit diese die oben beschriebenen Merkmale aufweisen. Insbesondere können Kabelrinnen 10 mit beliebigen Abmessungen, insbesondere der Breite des Bodenteils 11 und der Höhe der Seitenteile 12, eingesetzt werden. Ferner können die Seitenwände 12 oder das Bodenteil 11 auch aus mehreren Einzelstücken 111 bestehen, die einander z.B. überlappen oder voneinander getrennt sind.

## Patentansprüche

1. Kabelführungsvorrichtung (1) mit einer aus wenigstens einem plattenförmigen Metallkörper gefertigten, der Aufnahme von zu installierenden Leitungen (91, 92, 93) dienenden Kabelrinne (10), die aus einem Bodenteil (11) und zwei Seitenwänden (12) besteht, durch die ein Kanal (K) gebildet wird, **dadurch gekennzeichnet, dass** innerhalb des Kanals (K) wenigstens eine dem Halten und der Führung einzelner der Leitungen (91, 92, 93) dienende Gitterstruktur (2) angeordnet ist, die parallel zu den Seitenwänden (12) verlaufende Längsstege (27) und quer zu den Seitenwänden (12) verlaufende Querstege (26) aufweist, die miteinander verbunden sind, wobei die Gitterstruktur (2) mit wenigstens einer der Seitenwände (12) verbunden ist.

2. Kabelführungsvorrichtung (1) nach Anspruch 1, **dadurch gekennzeichnet, dass** einzelne oder alle Endstücke (261) der Querstege (26) der Gitterstruktur (2) in Öffnungen (15) der Seitenwände (12) gehalten sind oder dass Längsstege (27) der Gitterstruktur (2) in Haken (28) gehalten sind, die in die Seitenwände (12) eingearbeitet sind.

3. Kabelführungsvorrichtung (1) nach Anspruch 1, **dadurch gekennzeichnet, dass** die Gitterstruktur (2) von einer Haltevorrichtung (29) gehalten ist, welche ein mit dem oberen Endelement (121) einer Seitenwand (12) verbindbares Kopplungselement (291) und einem mit der Gitterstruktur (2) verbindbares Halteelement (292, 293) aufweist.

4. Kabelführungsvorrichtung (1) nach Anspruch 3, **dadurch gekennzeichnet, dass** das Halteelement (292, 293) L-förmig ausgebildet ist und ein mit dem Kopplungselement (291) verbundenes Seitenstück (292) und ein Basisstück (293) aufweist, auf dem die Gitterstruktur (2) ruht.

5. Kabelführungsvorrichtung (1) nach einem der Ansprüche 1 - 4, **dadurch gekennzeichnet, dass** wenigstens eine der Seitenwände (12) mit Haken (28) versehen ist, die in das Innere des Kanals (K) gerichtet sind und in die die Gitterstruktur (2) eingehängt ist, wobei vorzugsweise zwei oder mehrere Haken (28) je eine senkrecht zum Bodenteil (11) der Kabelrinne (10) verlaufende Hakenschiene (280) bilden.

6. Kabelführungsvorrichtung (1) nach Anspruch 5, **dadurch gekennzeichnet, dass** die Haken (28) aus der Seitenwand (12) ausgeschnitten und in das Innere des Kanals (K) gedreht sind oder dass die Haken (28) aus der Seitenwand (12) ausgeschnitten und bei Bedarf in das Innere des Kanals (K) eindrehbar sind.

7. Kabelführungsvorrichtung (1) nach einem der Ansprüche 1 bis 6, **dadurch gekennzeichnet, dass** die Gitterstruktur (2) aus zwei Strukturteilen (21, 22) mit stabförmigen und/oder L-förmigen Querstegen (26) besteht, die gelenkig miteinander verbunden sind oder dass die einteilige Gitterstruktur (2) L- oder U-förmige Querstege (26) aufweist, die in der Seitenwand (12) und/oder im Bodenteil (11) verankert sind.

8. Kabelführungsvorrichtung (1) nach Anspruch 7, **dadurch gekennzeichnet, dass** zumindest das erste Strukturteil (21) L-förmige Querstege (26) aufweist, die ein längeres Stegelement (264) und ein kürzeres Stegelement (265) und ein Gelenkelement (262) umfassen, welches mit einem Gelenkelement (262) des anderen Strukturteils (22) verbunden ist, welches stabförmige Querstege (26) aufweist.

9. Kabelführungsvorrichtung (1) nach Anspruch 7 oder 8, **dadurch gekennzeichnet, dass** die Endstücke (261) der längeren Stegelemente (264) gekrümmt und durch Öffnungen (15) in den Seitenwänden (12) und oder im Bodenteil (11) hinaus geführt sind.

10. Kabelführungsvorrichtung (1) nach Anspruch 7, 8 oder 9, **dadurch gekennzeichnet, dass** die Querstege (26) der Gitterstruktur (2) mit nur einer Seitenwand (12) verbunden sind, so dass die längeren Stegelemente (265) der Querstege (26) übereinander liegen oder dass das erste Strukturteil (21) mit der ersten Seitenwand (12) und dass das zweite Strukturteil (22) mit der zweiten Seitenwand (12) verbunden ist, so dass die längeren Stegelemente (265) der Querstege (26) zumindest annähernd in einer Ebene liegen.

11. Kabelführungsvorrichtung (1) nach einem der Ansprüche 7 bis 10, **dadurch gekennzeichnet, dass** die mit nur einer Seitenwand (12) verbundenen Querstege (26) mit beiden Endstücken (261) in Öffnungen (15) der Seitenwand (12) verankert sind, oder dass die mit nur einer Seitenwand (12) verbundenen Querstege (26) einseitig mit wenigstens zwei Endstücken (261) in Öffnungen (15) der Seitenwand (12) verankert sind und auf derselben Seite durch wenigstens ein Endstück (261') an der Seitenwand (12) abgestützt sind.

12. Kabelführungsvorrichtung (1) nach einem der Ansprüche 1 bis 11, **dadurch gekennzeichnet, dass** die Querstege (26) und die Längsstege (27) der vorzugsweise mit Kunststoff beschichteten Gitterstruktur (2) in einem regelmässigen Rasterabstand angeordnet sind, der vorzugsweise an den Abstand der Haken (28) und/oder der Öffnungen (15) in der Seitenwand (12) oder im Bodenteil (11) angepasst ist.

13. Kabelführungsvorrichtung (1) nach einem der Ansprüche 1 bis 12, **dadurch gekennzeichnet, dass** eine Halterung (290) vorgesehen ist, mittels der eine Gitterstruktur (2) gehalten ist, welche mit einem Teil in der Kabelrinne (10) gehalten ist und gebogene Längsstege (27) aufweist, an die ein aus der Kabelrinne (10) hinaus geführtes Teil der Gitterstruktur (2) anschliesst.

14. Kabelrinne (10) für eine Kabelführungsvorrichtung (1) nach einem der Ansprüche 1 bis 14 bestehend aus einem Bodenteil (11) und zwei Seitenwänden (12), die aus wenigstens einem plattenförmigen Metallkörper gefertigt sind und durch die ein der Aufnahme von zu installierenden Leitungen (91, 92, 93) Kanal (K) dienender gebildet wird, **dadurch gekennzeichnet, dass** in einer oder in beiden Seitenwänden (12) vorzugsweise auf gleicher Höhe einzelne oder senkrecht zum Bodenteil (11) der Kabelrinne (10) verlaufende Serien (280) von Haken (28) ausgeschnitten sind, in die eine Gitterstruktur (2) eingehängt werden kann, nachdem die Haken (28) die in das Innere der Kabelrinne (10) gedreht wurden.

15. Kabelrinne (10) nach Anspruch 14, **dadurch gekennzeichnet, dass** die Kabelrinne (10) Haken (28) oder Serien (280) von Haken (28) aufweist, die in das Innere der Kabelrinne (10) gedreht sind und in die vorzugsweise eine Gitterstruktur (2) eingehängt ist.
